# EUROPEAN PATENT APPLICATION

(11) **EP 4 383 679 A1**
(43) Date of publication of application: **12.06.2024**
(21) Application number: 23215362.7
(22) Date of filing: 08.12.2023
(51) Int. Cl.: H04L 65/1033

(54) **CONTROL SYSTEM DATA NETWORK FOR DISPENSING CHEMICAL PRODUCTS IN MULTI-APPLIANCE ENVIRONMENT**

(30) Priority: 08.12.2022 US 202263386544 P
(71) Applicant: Delaware Capital Formation, Inc., Wilmington, DE 19809 (US)
(72) Inventor: Cremades, Herme, 08500-VIC Barcelona (ES); Menkedick, Doug, Wilmington, 19809 (US)
(74) Representative: Fish & Richardson P.C.

(57) **Abstract**

Systems and methods for dispending chemical products to a washing machine in a multi-washing machine environment. A chemical dispensing system includes a system controller and a protocol gateway. The system controller is configured to cause the chemical dispensing system to selectively dispense a respective amount of one or more products to one or more washing machines of a plurality of washing machines. The protocol gateway is configured to receive first information indicative of a state of a first washing machine of the plurality of washing machines. The first information received by the protocol gateway is transmitted over a first physical layer according to a first communication protocol. The protocol gateway adapts the first information from the first communication protocol to a second communication protocol, and transmits the first information to the system controller according to the second communication protocol over a second physical layer.

## Description

### FIELD OF THE INVENTION

The present invention relates generally to chemical dispensing systems and, more particularly, to chemical dispensing systems configured to operate in a multi-appliance environment.

### BACKGROUND

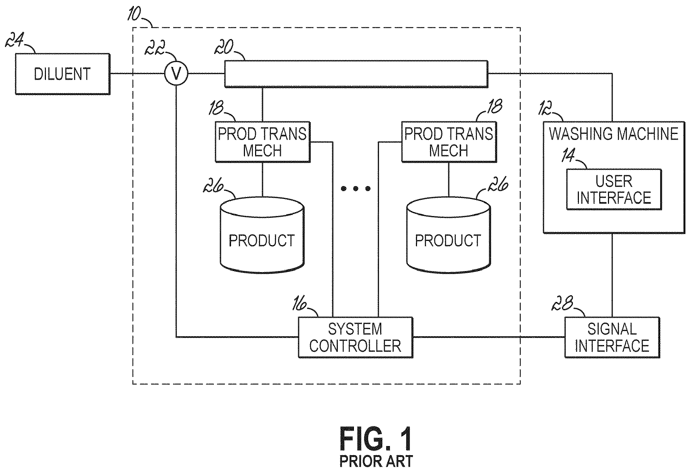

The dispensing of chemical products is a common requirement in many industries, such as the laundry, textile, ware wash, healthcare, and food processing industries. For example, in a commercial laundry facility, a washing machine periodically requires various aqueous solutions containing quantities of different chemicals, such as detergents, bleaches, softeners, and the like. FIG. 1 depicts an exemplary chemical dispensing system 10 that dispenses chemicals to a washing machine 12. The washing machine 12 includes a user interface 14, and the dispensing system 10 includes a system controller 16, one or more product transfer mechanisms 18, a flush manifold 20, and a diluent valve 22. The diluent valve 22 selectively couples the flush manifold 20 to a source of diluent 24 (e.g., a municipal water system) in response to signals from the system controller 16. The system controller 16 causes the dispensing system 10 to provide controlled doses of chemical products 26 to the washing machine 12 by selectively activating one or more of the product transfer mechanisms 18 (e.g., pumps, venturis, valves, etc.) and opening the diluent valve 22. Each activated product transfer mechanism 18 pumps or otherwise enables a controlled amount of its respective chemical product 26 to flow or be drawn into the flush manifold 20 where the chemical product 26 is transported into the washing machine 12 by the flow of diluent.

So that the system controller 16 can determine when to dispense the chemical products 26, the system controller 16 is operatively coupled to the washing machine 12 by a signal interface module 28. The signal interface module 28 receives trigger signals from the washing machine 12 indicative of an operational state thereof, e.g., the beginning or end of a fill cycle, wash cycle, rinse cycle, etc. These signals may be generated by relays, switches, solenoids, etc. of the washing machine 12 as it steps through a wash cycle, and may be coupled to the signal interface module 28 by multi-conductor cable. Thus, the signals received from the washing machine 12 by the signal interface module 28 are characterized by the presence or absence of a voltage in each of the conductors.

During installation of the dispensing system 10, the installer must identify where to tap into these voltage signals. In some cases, the washing machine 12 may include specific outputs that can be tapped into to monitor the voltage signals. In this case, the outputs can be identified relatively easily and used to connect to the signal interface module 28. Some washing machines 12 may lack specific signal outputs. In this case, the technician must look for points on relays, electrically controlled valves, or other washing machine components where suitable voltage signals are present, and connect the conductors to these points.

Once the dispensing system 10 has been installed, the technician may program the user interface 14 of washing machine 12 to run a number of preprogrammed washing cycles. Each washing cycle may be configured for a different linen (e.g., white bedsheets, napkins, towels, etc.), and include different washing phases (e.g., fill, wash, rinse, drain, etc.). Each cycle may also require various dosages of chemical products 26 before or during one or more phases of the cycle. The installer programs a washing cycle into the user interface 14 by entering each step of the cycle and assigning a number to the washing cycle. The user interface 14 typically includes a keypad and display (e.g., a six-digit LED display) for this purpose, and also for selecting and running washing cycles after they are programmed. To guide the programmer, the display may display the function being entered as well as the step number and cycle number being programmed. During operation of the washing machine, the user interface 14 may display the cycle number and step being executed.

The signal interface module 28 includes circuitry that receives the voltage signals from the washing machine 12, determines the state of the washing machine 12 based thereon, and sends the information regarding the state of the washing machine 12 to the system controller 16. This information is sent over a suitable data link, such as a Modbus serial data link. Modbus is a data communications protocol originally published by Modicon (now Schneider Electric Company of Rueil-Malmaison, France) for use with programmable logic controllers (PLCs) that has become a *de facto* standard communication protocol for connecting industrial electronic devices. When the washing machine 12 emits the signals, they are detected and interpreted by the signal interface module 28, which then translates the signals into the data that defines a formula and washing phase. This information is typically stored in the signal interface module 28 and delivered to the system controller 16 in response to receiving a request for the information from the system controller 16.

The above arrangement works reasonably well for basic installations including a single washing machine 12. However, it is unable to provide the system controller 16 with information about changes in the state of the washing machine 12 that are not related to trigger signals generated by the washing machine 12. It is also not particularly well suited for managing installations having multiple washing machines 12. Thus, there is a need for improved systems, methods, and computer program products controlling chemical dispensers in operational environments including multiple washing machines.

### SUMMARY

In an embodiment of the invention, a chemical dispensing system is provided. The chemical dispensing system includes a system controller and a protocol gateway. The system controller is configured to cause the chemical dispensing system to selectively dispense a respective amount of one or more products to one or more washing machines of a plurality of washing machines. The protocol gateway is configured to receive first information transmitted over a first physical layer according to a first communication protocol, adapt the first information from the first communication protocol to a second communication protocol, and transmit the first information to the system controller according to the second communication protocol over a second physical layer, wherein the first information is indicative of a state of a first washing machine of the plurality of washing machines.

In an aspect of the system, the protocol gateway may be further configured to receive second information transmitted over the first physical layer according to a third communication protocol, adapt the second information from the third communication protocol to the second communication protocol, and transmit the second information to the system controller according to the second communication protocol over the second physical layer, wherein the second information is indicative of a state of a second washing machine of the plurality of washing machines.

In another aspect of the system, the chemical dispensing system may further include a first protocol interface module configured to receive the first information from the first washing machine, adapt the third physical layer to the first physical layer, and transmit the first information according to the first communication protocol over the first physical layer. The first information may be transmitted from the first washing machine to the first protocol interface module over a third physical layer according to the first communication protocol.

In another aspect of the system, the first physical layer may include an appliance data bus having a first data rate, the third physical layer may include a first washing machine data link having a second data rate different from the first data rate, and the first protocol interface module may adapt the third physical layer to the first physical layer by transmitting the first information according to the first communication protocol at the first data rate on the appliance data bus.

In another aspect of the system, the chemical dispensing system may further include a second protocol interface module configured to receive second information from a second washing machine of the plurality of washing machines, adapt the fourth physical layer to the first physical layer, and transmit the second information according to the third communication protocol over the first physical layer. The second information may be transmitted from the second washing machine to the second protocol interface module over a fourth physical layer according to a third communication protocol.

In another aspect of the system, the first protocol interface module may be one of a plurality of protocol interface modules each in communication with the protocol gateway over the first physical layer, and the protocol gateway may be configured to receive respective information transmitted according to a respective communication protocol from each protocol interface module over the first physical layer, store the respective information, and transmit the respective information to the system controller according to the second communication protocol over the second physical layer.

In another aspect of the system, the second physical layer may include a controller data bus associated with a plurality of bus addresses, and the protocol gateway may be further configured to associate each protocol interface module of the plurality of protocol interface modules with a respective bus address of the plurality of bus addresses, associate information received from a respective protocol interface module with the respective bus address associated with the respective protocol interface module, and in response to receiving a query from the system controller including the respective bus address, transmit the stored information associated with the respective bus address to the system controller over the second physical layer.

In another aspect of the system, the chemical dispensing system may further include a signal interface module configured to receive one or more signals from another washing machine of the plurality of washing machines, generate information based on the one or more signals, and transmit the information to the system controller according to the second communication protocol over the second physical layer.

In another aspect of the system, the first information may define one or more of a formula number, a washing phase of the first washing machine, an amount of linen in the first washing machine, an amount of water in the first washing machine, and a temperature of the water in the first washing machine.

In another aspect of the system, the system controller may be configured to select the one or more products and determine the amount of the one or more products to dispense to the first washing machine based on the first information.

In another embodiment of the invention, a method of selectively dispensing a respective amount of one or more products to one or more washing machines of the plurality of washing machines is provided. The method includes receiving, at the protocol gateway, first information transmitted over the first physical layer according to the first communication protocol, wherein the first information is indicative of the state of the first washing machine of the plurality of washing machines, adapting, by the protocol gateway, the first information from the first communication protocol to the second communication protocol, transmitting, by the protocol gateway, the first information to the system controller according to the second communication protocol over the second physical layer, and dispensing, by the system controller, the amount of the one or more products to the first washing machine based on the first information.

In an aspect of the method, the method may further include receiving, at the protocol gateway, the second information transmitted over the first physical layer according to the third communication protocol, wherein the second information is indicative of the state of the second washing machine of the plurality of washing machines, adapting, by the protocol gateway, the second information from the third communication protocol to the second communication protocol, and transmitting, by the protocol gateway, the second information to the system controller according to the second communication protocol over the second physical layer.

In another aspect of the method, the method may further include receiving, by the first protocol interface module, the first information from the first washing machine, adapting, by the first protocol interface module, the third physical layer to the first physical layer, and transmitting, by the first protocol interface module, the first information according to the first communication protocol over the first physical layer, wherein the first information is transmitted from the first washing machine to the first protocol interface module over the third physical layer according to the first communication protocol.

In another aspect of the method, the first physical layer may include the appliance data bus having the first data rate, the third physical layer may include the first washing machine data link having the second data rate different from the first data rate, and adapting the third physical layer to the first physical layer may include transmitting the first information according to the first communication protocol at the first data rate on the appliance data bus.

In another aspect of the method, the method may further include receiving, by the second protocol interface module, the second information from the second washing machine of the plurality of washing machines, adapting, by the second protocol interface module, the fourth physical layer to the first physical layer, and transmitting, by the second protocol interface module, the second information according to the third communication protocol over the first physical layer, wherein the second information is transmitted from the second washing machine to the second protocol interface module over the fourth physical layer according to the third communication protocol.

In another aspect of the method, the first protocol interface module may be one of the plurality of protocol interface modules each in communication with the protocol gateway over the first physical layer, and the method may further include receiving, by the protocol gateway, respective information transmitted according to a respective communication protocol from each protocol interface module over the first physical layer, storing, by the protocol gateway, the respective information, and transmitting, by the protocol gateway, the respective information to the system controller according to the second communication protocol over the second physical layer.

In another aspect of the method, the second physical layer may include the controller data bus associated with the plurality of bus addresses, and the method may further include associating, by the protocol gateway, each protocol interface module of the plurality of protocol interface modules with the respective bus address of the plurality of bus addresses, associating, by the protocol gateway, the information received from a respective protocol interface module with the respective bus address associated with the respective protocol interface module, and in response to receiving, at the protocol gateway, a query from the system controller including the respective bus address, transmitting, by the protocol gateway, the stored information associated with the respective bus address to the system controller over the second physical layer.

In another aspect of the method, the method may further include receiving, by the signal interface module, one or more signals from another washing machine of the plurality of washing machines, generating, by the signal interface module, second information based on the one or more signals, and transmitting, by the signal interface module, the second information to the system controller according to the second communication protocol over the second physical layer.

In another aspect of the method, the first information may define one or more of the formula number, the washing phase of the first washing machine, the amount of linen in the first washing machine, the amount of water in the first washing machine, and the temperature of the water in the first washing machine.

In another aspect of the method, the system controller may be configured to select the one or more products and determine the amount of the one or more products to dispense to the first washing machine based on the first information.

The above summary presents a simplified overview of some embodiments of the invention to provide a basic understanding of certain aspects of the invention discussed herein. The summary is not intended to provide an extensive overview of the invention, nor is it intended to identify any key or critical elements, or delineate the scope of the invention. The sole purpose of the summary is merely to present some concepts in a simplified form as an introduction to the detailed description presented below.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary chemical dispensing system that is known in the art.
FIG. 2 is a diagrammatic view of an improved chemical dispensing system configured to selectively dispense controlled amounts of chemical products to one or more of a plurality of washing machines.
FIG. 3 is a diagrammatic view of a computer that may be used to implement one or more of the components or processes shown in FIG. 2.

It should be understood that the appended drawings are not necessarily to scale, and may present a somewhat simplified representation of various features illustrative of the basic principles of the invention. The specific design features of the sequence of operations disclosed herein, including, for example, specific dimensions, orientations, locations, and shapes of various illustrated components, may be determined in part by the particular intended application and use environment. Certain features of the illustrated embodiments may have been enlarged or distorted relative to others to facilitate visualization and a clear understanding. In particular, thin features may be thickened, for example, for clarity or illustration.

### DETAILED DESCRIPTION

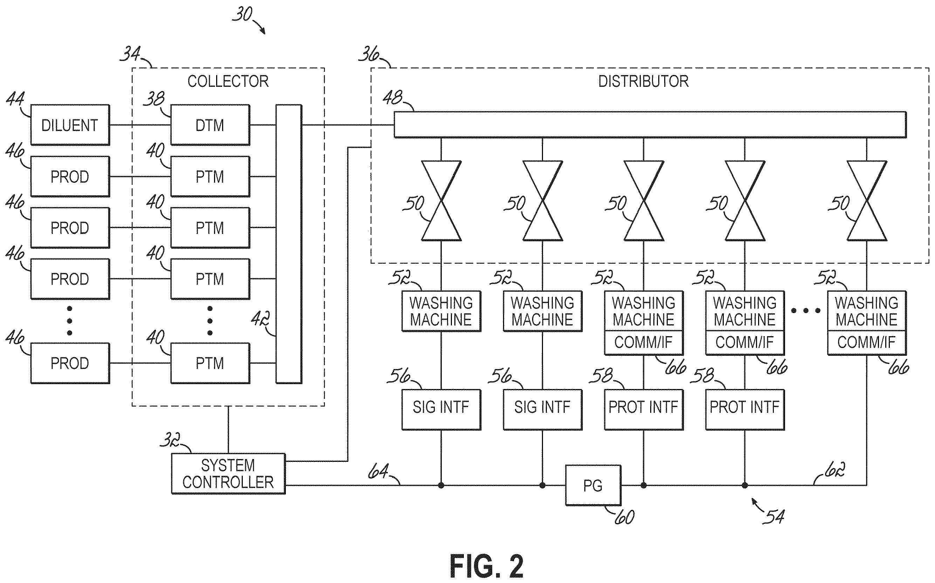

FIG. 2 depicts a dispensing system 30 including a system controller 32 operatively coupled to a collector 34 and a distributor 36. The collector 34 includes a diluent transfer mechanism 38 and one or more product transfer mechanisms 40. The diluent transfer mechanism 38 is configured to selectively couple a collector manifold 42 to a source of diluent 44 in response to signals from the system controller 32. To this end, the diluent transfer mechanism 38 may include one or more valves and pumps. By way of example, for embodiments in which the diluent is provided under pressure (e.g., from a municipal water system), the diluent transfer mechanism 38 may include a valve that is selectively activated by the system controller 32 to provide diluent to the collector manifold 42 and/or one or more product transfer mechanisms 40 (described in more detail below). In cases where the diluent is not provided under pressure (e.g., from a tank of diluent), the diluent transfer mechanism 38 may include a pump that is selectively activated by the system controller 32 to provide diluent to the collector manifold 42 and/or one or more product transfer mechanisms 40.

Each product transfer mechanism 40 may include one or more pumps, valves, venturis, or other suitable components configured to selectively transfer product from a source of product 46 to the collector manifold 42. This transfer may occur in response to signals from the system controller 32 and/or a flow of diluent through the collector manifold 42. For embodiments in which the product transfer mechanism 40 includes a venturi-based pumping mechanism, the diluent transfer mechanism 38 may be configured to provide diluent under pressure to the pumping mechanism so as to cause the mechanism to draw product from its respective source of product 46. In other embodiments, one or more of the diluent transfer mechanism 38 and/or the product transfer mechanisms 40 may be operatively coupled to one or more pumps that are fewer in number than the total number of sources of diluent and products. These one or more pumps may each include an input that is selectively coupled to the source of diluent 44 or a source of product 46 by one or more valves under control of the system controller, and an output port that is operatively coupled to the collector manifold 42. In this way, the one or more pumps (e.g., a single pump) may be used to individually and selectively provide each of the diluent and products to the collector manifold 42 in a controlled manner.

The distributor 36 includes a distribution manifold 48 that is operatively coupled to the collector manifold 42 (e.g., by one or more tubes), and one or more distribution valves 50. Each distribution valve 50 may be configured to selectively fluidically couple the distribution manifold 48 to one of a plurality of washing machines 52 in response to signals from the system controller 32. The system controller 32 may thereby control how much of each product is dispensed, and to which washing machine 52 the dispensed product is provided.

The system controller 32 may receive information from each washing machine 52 through a communication network 54 including one or more signal interface modules 56, protocol interface modules 58, and a protocol gateway 60 that operatively couples an appliance data bus 62 to a controller data bus 64. This information may be used to trigger dispensing operations that dispense a specific formula to a specific washing machine 52 at specific times.

Each signal interface module 56 may be connected to the controller data bus 64, have a unique data bus address, and communicate with the system controller 32 using a suitable communication protocol, e.g., a Modbus protocol. Each signal interface module 56 may include one or more circuits configured to receive signals sent by the washing machine 52 to which it is connected (e.g., voltage present/absent trigger signals) and convert these signals to digital logic level signals. These digital logic level signals may be provided to a signal interface processor (not shown). The signal interface processor may interpret the signals to determine a state of the washing machine 52 (e.g., washing phase) and/or dispensing operation to be performed (e.g., formula number) and store data indicative of this information in memory. This information may remain stored in memory of the signal interface module 56 so that it can be delivered to the system controller 32 when requested. In response to a signal interface module 56 receiving a query from the system controller 32 having the data bus address assigned to the signal interface module 56, the signal interface module 56 may generate a message formatted according to the controller data bus communication protocol, and transmit the message to the system controller 32 over the controller data bus 64.

The exemplary operating environment of dispensing system 30 includes some washing machines 52 that have a communication interface 66. The communication interface 66 may be configured to transmit information using a set of instructions defined by the manufacturer of the washing machine 52, referred to herein as a "manufacturer protocol". Washing machines 52 including the communication interface 66 may communicate information such as their state to external systems using the manufacturer protocol. The manufacturer protocol may include messages formatted to include information such as formula numbers, washing phase, weight of the laundry load in the drum (e.g., in kilograms or pounds weighed prior to filling the drum with water), level of water in the drum, water temperature, washing machine status, dispenser status, alarm signals, or any other information depending on the preferences of the manufacturer. Since the manufacturer protocol enables information to be embedded in messages transmitted by the washing machine, there is no need to interpret signals to determine the state of the washing machine as described above with respect to the signal interface modules 56.

Because each manufacturer defines its own protocol, communication interfaces 66 of washing machines 52 from different manufacturers may use incompatible manufacturer protocols. To solve this problem, washing machines 52 including a communication interface 66 may be operatively coupled to the appliance data bus 62 by a respective protocol interface module 58.

Each communication interface 66 may be connected to its respective protocol interface module 58 by a serial communications link, e.g., a Recommended Standard 232 (RS-232) or Recommended Standard 485 (e.g., RS-485) link, ethernet, wireless or radio communication links (e.g, WiFi,, Bluetooth, LoRa) or other communication link. Each protocol interface module 58 may be configured to adapt the physical layer of the manufacturer protocol to the physical layer of the appliance data bus 62 while retaining data layer formatting. That is, the physical layer adaptation may include retransmitting received information using different data rates and other physical layer characteristics without translating or otherwise altering the format of the data carried by the physical layer.

By way of example, a communication interface 66 from manufacturer A may transmit information formatted according to instruction set A over an RS-232 link at 2400 baud, and the protocol gateway 60 may be configured to communicate over an RS-485 link at 9600 baud. In this case, the appliance data bus 62 may comprise an RS-485 link that is operated at 9600 baud. The protocol interface module 58 associated with the washing machine from manufacturer A may be configured to receive instruction set A over an RS-232 link at 2400 baud, and retransmit instruction set A over the appliance data bus 62 at 9600 baud. Continuing with our example, a communication interface 66 from manufacturer B may transmit information formatted according to instruction set B over an RS-485 link at 19200 baud. In this case, the protocol interface module 58 associated with the washing machine from manufacturer B may be configured to receive instruction set B over an RS-485 link at 19200 baud, and retransmit instruction set B over the appliance data bus at 9600 baud. The protocol gateway 60 may be configured to receive and understand both instruction sets, but receives the instructions over an RS-485 link at 9600 baud. Thus, each protocol interface module 58 is configured to retransmit the manufacturer's instructions using the physical layer of the appliance data bus 62. In cases where the manufacturer protocol has the same physical layer as the appliance data bus 62, the communication interface 66 of the washing machine 52 may be connected directly to the appliance data bus 62 rather than through a protocol interface module 58.

The protocol gateway 60 may be configured to receive the information transmitted by each of the washing machines 52 having a communication interface 66 (either directly or through a protocol interface module 58), translate the manufacturer's instructions into an instruction set understandable by the system controller 32, and store the instructions in memory until queried by the system controller 32. The protocol gateway 60 may associate the stored instructions with a unique controller data bus address that identifies the washing machine 52 which originated the instructions. The unique controller data bus address may be assigned by a data bus controller (e.g., the system controller 32) to manage communication over the controller data bus 64, and may be assigned separately from any machine identification used to address the washing machine over the appliance data bus 62. In response to receiving a request for data from the system controller 32 having a controller data bus address that matches the address associated with stored instructions, the protocol gateway 60 may transmit the stored instructions to the system controller 32 over the controller data bus 64. The protocol gateway 60 may thereby enable the washing machines 52 connected to the appliance data bus 62 to appear to the system controller 32 as if they were connected directly to the controller data bus 64.

The system controller 32 can communicate with the washing machines 52 (e.g., using the signal interface module 56 or the protocol gateway 60). For example, the system controller can send a "pause" signal to the washing machine 52 to pause communication from the washing machine 52 until the system controller 32 sends an "unpause" signal. Other information can be communicated from the system controller 32 to the washing machine 52 such as a "stop" message indicating that an emergency stop button has been pressed or an "out-of-product" message indicating that a source of product 46 needs to be refilled. In response to receiving the "stop" and "out-of-product" messages, the washing machine 52 can stop operating until a "resume" message is received.

In response to querying a signal interface module 56, the system controller 32 may receive data indicative of a formula number and washing phase. Based on this data, the system controller 32 may look up the dosage of product(s) that need to be delivered to the washing machine 52 associated with the signal interface module 56 in question. These dosages may be calculated using a presumption that the washing machine 52 has a nominal laundry load. Once the dosages are delivered to the washing machine in question, the system controller 32 may store the results as statistics for later use.

In response to querying the protocol gateway 60, the system controller 32 may also receive data indicative of a formula number and washing phase. As in the previous case, the system controller 32 may use the formula number and washing phase to determine the dosages of products to be dispensed to the washing machine 52 in question. However, the system controller 32 may also adjust the doses based on the laundry load indicated by the washing machine 52. In a multimachine system (also called central system), the doses in the formulas may be stored as amount per weight, e.g., grams per kilogram. This may allow each formula to be applied to multiple washing machines 52 regardless of their capacity.

Often, washing machines 52 may not be fully loaded, in which case presuming a laundry load equal to the nominal capacity overestimates the amount of laundry being washed. In cases where formula and washing phase information is obtained from a signal interface module 56, this may result in the washing machine 52 being overdosed with products during the wash cycle. Providing the system controller 32 with information regarding the laundry load being washed allows the system controller 32 to adjust the doses specified by the formula according to the weight of the laundry load as measured by the washing machine. By way of example, presume a formula specifies a dose of 5 g/kg of softener to a 50 kg machine that has been 50 percent loaded. Absent laundry load data, the system controller 32 would presume a nominal load of 50 kg, and dispense 5x 50 = 250 grams of softener. With laundry load data indicating 25 kg laundry load, the system controller 32 would dose 5 × 25 = 125 grams of softener. Advantageously, by preventing overdosing of chemical products, embodiments of the invention may reduce the cost of providing chemical products, as well as the environmental impact of disposing of the wastewater having a higher-than-normal amount of product.

The system controller 32 and/or protocol gateway 60 may store information relating to the processes performed by each of the washing machines 52. If the laundry loads being washed are known, this information may allow the amount of laundry processed over a specified period to be determined. As an example, presume two washing machines 52 have performed 10 cycles each, with the smaller washing machine having a nominal capacity of 10 kg, and the larger washing machine having a nominal capacity of 30 kg. In the absence of laundry load data, the total production would be estimated as (10 × 10) + (10 × 30) = 400 kg. However, if the larger washing machine was only being loaded at 50 percent capacity, the actual production would be only (10 × 10) + (10 × 15) = 250 kg. Thus, the ability to actively determine laundry loads may provide more accurate production numbers.

Advantageously, the protocol gateway 60 may provide improved dosage accuracy in cases where loads are smaller or larger than the nominal design load of the washing machine. The protocol gateway 60 may also enable accurate statistical tracking of actual consumption of products and production. Still further improvements in dosing and washing performance may be made by incorporating additional information such as water temperatures and levels into the dosing determination process.

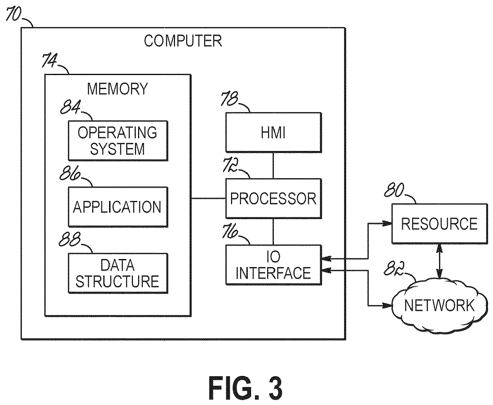

Referring now to FIG. 3, embodiments of the invention described above, or portions thereof (such as, but not limited to, one or more of the system controller 32, signal interface modules 56, protocol interface modules 58, protocol gateway 60, and/or communication interfaces 66) may be implemented using one or more computer devices or systems, such as exemplary computer 70. The computer 70 may include a processor 72, a memory 74, an input/output (I/O) interface 76, and a Human Machine Interface (HMI) 78. The computer 70 may also be operatively coupled to one or more external resources 80 via a network 82 or I/O interface 76. External resources may include, but are not limited to, servers, databases, mass storage devices, peripheral devices, cloud-based network services, or any other resource that may be used by the computer 70.

The processor 72 may include one or more devices that manipulate signals (analog or digital) based on operational instructions stored in memory 74. The processor 72 may operate under the control of an operating system 84 that resides in memory 74. The operating system 84 may manage computer resources so that computer program code embodied as one or more computer software applications, such as an application 86 residing in memory 74, may have instructions executed by the processor 72. One or more data structures 88 may also reside in memory 74, and may be used by the processor 72, operating system 84, or application 86 to store or manipulate data.

The I/O interface 76 may provide a machine interface that operatively couples the processor 72 to other devices and systems, such as the external resource 80 or the network 82. The application 86 may thereby work cooperatively with the external resource 80 or network 82 by communicating via the I/O interface 76 to provide the various features, functions, applications, processes, or modules comprising embodiments of the invention. The application 86 may also have program code that is executed by one or more external resources 80, or otherwise rely on functions or signals provided by other system or network components external to the computer 70.

The HMI 78 may be operatively coupled to the processor 72 of computer 70 to allow users to interact directly with the computer 70. The HMI 78 may include video or alphanumeric displays, a touch screen, a speaker, and any other suitable audio and visual indicators capable of providing data to the user. The HMI 78 may also include input devices and controls such as an alphanumeric keyboard, a pointing device, keypads, pushbuttons, control knobs, microphones, etc., capable of accepting commands or input from the user and transmitting the entered input to the processor 72.

In general, the routines executed to implement the embodiments of the invention, whether implemented as part of an operating system or a specific application, component, program, object, module or sequence of instructions, or a subset thereof, may be referred to herein as "program code." Program code typically comprises computer-readable instructions that are resident at various times in various memory and storage devices in a computer and that, when read and executed by one or more processors in a computer, cause that computer to perform the operations necessary to execute operations or elements embodying the various aspects of the embodiments of the invention.

The program code embodied in any of the applications or modules described herein is capable of being individually or collectively distributed as a computer program product in a variety of different forms. In particular, the program code may be distributed using a computer-readable storage medium having computer-readable program instructions thereon for causing a processor to carry out aspects of the embodiments of the invention. Computer-readable storage media, which is inherently non-transitory, may include volatile and non-volatile, and removable and non-removable tangible media implemented in any method or technology for storage of data, such as computer-readable instructions, data structures, program modules, or other data.

The terminology used herein is for the purpose of describing particular embodiments only and is not intended to be limiting of the embodiments of the invention. As used herein, the singular forms "a", "an", and "the" are intended to include both the singular and plural forms, and the terms "and" and "or" are each intended to include both alternative and conjunctive combinations, unless the context clearly indicates otherwise. It will be further understood that the terms "comprises" or "comprising," when used in this specification, specify the presence of stated features, integers, actions, steps, operations, elements, or components, but do not preclude the presence or addition of one or more other features, integers, actions, steps, operations, elements, components, or groups thereof. Furthermore, to the extent that the terms "includes", "having", "has", "with", "comprised of', or variants thereof are used in either the detailed description or the claims, such terms are intended to be inclusive in a manner similar to the term "comprising".

While all the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

### Embodiments

Although the present invention is defined in the claims, it should be understood that the present invention can also (alternatively) be defined in accordance with the following embodiments:
1. A chemical dispensing system, comprising:
   a system controller configured to cause the chemical dispensing system to selectively dispense a respective amount of one or more products to one or more washing machines of a plurality of washing machines; and
   a protocol gateway configured to:
      receive first information transmitted over a first physical layer according to a first communication protocol, wherein the first information is indicative of a state of a first washing machine of the plurality of washing machines,
      adapt the first information from the first communication protocol to a second communication protocol, and
      transmit the first information to the system controller according to the second communication protocol over a second physical layer.
2. The chemical dispensing system of embodiment 1, wherein the protocol gateway is further configured to:
   receive second information transmitted over the first physical layer according to a third communication protocol, wherein the second information is indicative of a state of a second washing machine of the plurality of washing machines,
   adapt the second information from the third communication protocol to the second communication protocol, and
   transmit the second information to the system controller according to the second communication protocol over the second physical layer.
3. The chemical dispensing system of embodiment 1, further
   comprising: a first protocol interface module configured to:
   receive the first information from the first washing machine, wherein the first information is transmitted from the first washing machine to the first protocol interface module over a third physical layer according to the first communication protocol,
   adapt the third physical layer to the first physical layer, and
   transmit the first information according to the first communication protocol over the first physical layer.
4. The chemical dispensing system of embodiment 3, wherein the first physical layer includes an appliance data bus having a first data rate, the third physical layer includes a first washing machine data link having a second data rate different from the first data rate, and the first protocol interface module adapts the third physical layer to the first physical layer by transmitting the first information according to the first communication protocol at the first data rate on the appliance data bus.
5. The chemical dispensing system of embodiment 3, further
   comprising: a second protocol interface module configured to:
   receive second information from a second washing machine of the plurality of washing machines, wherein the second information is transmitted from the second washing machine to the second protocol interface module over a fourth physical layer according to a third communication protocol,
   adapt the fourth physical layer to the first physical layer, and
   transmit the second information according to the third communication protocol over the first physical layer.
6. The chemical dispensing system of embodiment 3, wherein the first protocol interface module is one of a plurality of protocol interface modules each in communication with the protocol gateway over the first physical layer, and the protocol gateway is configured to receive respective information transmitted according to a respective communication protocol from each protocol interface module over the first physical layer, store the respective information, and transmit the respective information to the system controller according to the second communication protocol over the second physical layer.
7. The chemical dispensing system of embodiment 6, wherein the second physical layer includes a controller data bus associated with a plurality of bus addresses, and the protocol gateway is configured to:
   associate each protocol interface module of the plurality of protocol interface modules with a respective bus address of the plurality of bus addresses;
   associate information received from a respective protocol interface module with the respective bus address associated with the respective protocol interface module; and
   in response to receiving a query from the system controller including the respective bus address, transmit the stored information associated with the respective bus address to the system controller over the second physical layer.
8. The chemical dispensing system of embodiment 1, further comprising:
   a signal interface module configured to receive one or more signals from a second washing machine of the plurality of washing machines, generate second information based on the one or more signals, and transmit the second information to the system controller according to the second communication protocol over the second physical layer.
9. The chemical dispensing system of embodiment 1, wherein the first information defines one or more of a formula number, a washing phase of the first washing machine, an amount of linen in the first washing machine, an amount of water in the first washing machine, a temperature of the water in the first washing machine, a status of the first washing machine, and an alarm signal associated with the first washing machine.
10. The chemical dispensing system of embodiment 1, wherein the system controller is configured to select the one or more products and determine the respective amount of the one or more products to dispense to the first washing machine based on the first information.
11. A method of selectively dispensing a respective amount of one or more products to one or more washing machines of a plurality of washing machines, comprising:
   receiving, at a protocol gateway, first information transmitted over a first physical layer according to a first communication protocol, wherein the first information is indicative of a state of a first washing machine of the plurality of washing machines;
   adapting, by the protocol gateway, the first information from the first communication protocol to a second communication protocol;
   transmitting, by the protocol gateway, the first information to a system controller according to the second communication protocol over a second physical layer; and
   dispensing, by the system controller, an amount of the one or more products to the first washing machine based on the first information.
12. The method of embodiment 11, further comprising:
   receiving, at the protocol gateway, second information transmitted over the first physical layer according to a third communication protocol, wherein the second information is indicative of a state of a second washing machine of the plurality of washing machines;
   adapting, by the protocol gateway, the second information from the third communication protocol to the second communication protocol; and
   transmitting, by the protocol gateway, the second information to the system controller according to the second communication protocol over the second physical layer.
13. The method of embodiment 11, further comprising:
   receiving, by a first protocol interface module, the first information from the first washing machine, wherein the first information is transmitted from the first washing machine to the first protocol interface module over a third physical layer according to the first communication protocol;
   adapting, by the first protocol interface module, the third physical layer to the first physical layer; and
   transmitting, by the first protocol interface module, the first information according to the first communication protocol over the first physical layer.
14. The method of embodiment 13, wherein the first physical layer includes an appliance data bus having a first data rate, the third physical layer includes a first washing machine data link having a second data rate different from the first data rate, and adapting the third physical layer to the first physical layer includes transmitting the first information according to the first communication protocol at the first data rate on the appliance data bus.
15. The method of embodiment 13, further comprising:
   receiving, by a second protocol interface module, second information from a second washing machine of the plurality of washing machines, wherein the second information is transmitted from the second washing machine to the second protocol interface module over a fourth physical layer according to a third communication protocol;
   adapting, by the second protocol interface module, the fourth physical layer to the first physical layer; and
   transmitting, by the second protocol interface module, the second information according to the third communication protocol over the first physical layer.
16. The method of embodiment 13, wherein the first protocol interface module is one of a plurality of protocol interface modules each in communication with the protocol gateway over the first physical layer, and further comprising:
   receiving, by the protocol gateway, respective information transmitted according to a respective communication protocol from each protocol interface module over the first physical layer;
   storing, by the protocol gateway, the respective information; and
   transmitting, by the protocol gateway, the respective information to the system controller according to the second communication protocol over the second physical layer.
17. The method of embodiment 16, wherein the second physical layer includes a controller data bus associated with a plurality of bus addresses, and further comprising:
   associating, by the protocol gateway, each protocol interface module of the plurality of protocol interface modules with a respective bus address of the plurality of bus addresses;
   associating, by the protocol gateway, information received from a respective protocol interface module with the respective bus address associated with the respective protocol interface module; and
   in response to receiving, at the protocol gateway, a query from the system controller including the respective bus address, transmitting, by the protocol gateway, the stored information associated with the respective bus address to the system controller over the second physical layer.
18. The method of embodiment 11, further comprising:
   receiving, by a signal interface module, one or more signals from a second washing machine of the plurality of washing machines,
   generating, by the signal interface module, second information based on the one or more signals, and
   transmitting, by the signal interface module, the second information to the system controller according to the second communication protocol over the second physical layer.
19. The method of embodiment 11, wherein the first information defines one or more of a formula number, a washing phase of the first washing machine, an amount of linen in the first washing machine, an amount of water in the first washing machine, a temperature of the water in the first washing machine, a status of the first washing machine, and an alarm signal associated with the first washing machine.
20. The method of embodiment 11, wherein the system controller is configured to select a product and determine the amount of the one or more products to dispense to the first washing machine based on the first information.

## Claims

1. A chemical dispensing system, comprising:
a system controller configured to cause the chemical dispensing system to selectively dispense a respective amount of one or more products to one or more washing machines of a plurality of washing machines; and
a protocol gateway configured to
receive first information transmitted over a first physical layer according to a first communication protocol, wherein the first information is indicative of a state of a first washing machine of the plurality of washing machines,
adapt the first information from the first communication protocol to a second communication protocol, and
transmit the first information to the system controller according to the second communication protocol over a second physical layer.

2. The chemical dispensing system of claim 1, wherein the protocol gateway is further configured to:
receive second information transmitted over the first physical layer according to a third communication protocol, wherein the second information is indicative of a state of a second washing machine of the plurality of washing machines,
adapt the second information from the third communication protocol to the second communication protocol, and
transmit the second information to the system controller according to the second communication protocol over the second physical layer.

3. The chemical dispensing system of claim 1, further comprising:
a first protocol interface module configured to:
receive the first information from the first washing machine, wherein the first information is transmitted from the first washing machine to the first protocol interface module over a third physical layer according to the first communication protocol,
adapt the third physical layer to the first physical layer, and
transmit the first information according to the first communication protocol over the first physical layer.

4. The chemical dispensing system of claim 3, wherein the first physical layer includes an appliance data bus having a first data rate, the third physical layer includes a first washing machine data link having a second data rate different from the first data rate, and the first protocol interface module adapts the third physical layer to the first physical layer by transmitting the first information according to the first communication protocol at the first data rate on the appliance data bus.

5. The chemical dispensing system of claim 3, further comprising:
a second protocol interface module configured to:
receive second information from a second washing machine of the plurality of washing machines, wherein the second information is transmitted from the second washing machine to the second protocol interface module over a fourth physical layer according to a third communication protocol,
adapt the fourth physical layer to the first physical layer, and
transmit the second information according to the third communication protocol over the first physical layer.

6. The chemical dispensing system of claim 3, wherein the first protocol interface module is one of a plurality of protocol interface modules each in communication with the protocol gateway over the first physical layer, and the protocol gateway is configured to receive respective information transmitted according to a respective communication protocol from each protocol interface module over the first physical layer, store the respective information, and transmit the respective information to the system controller according to the second communication protocol over the second physical layer; optionally wherein the second physical layer includes a controller data bus associated with a plurality of bus addresses, and the protocol gateway is configured to:
associate each protocol interface module of the plurality of protocol interface modules with a respective bus address of the plurality of bus addresses;
associate information received from a respective protocol interface module with the respective bus address associated with the respective protocol interface module; and
in response to receiving a query from the system controller including the respective bus address, transmit the stored information associated with the respective bus address to the system controller over the second physical layer.

7. The chemical dispensing system of claim 1, further comprising:
a signal interface module configured to receive one or more signals from a second washing machine of the plurality of washing machines, generate second information based on the one or more signals, and transmit the second information to the system controller according to the second communication protocol over the second physical layer.

8. The chemical dispensing system of claim 1, wherein the first information defines one or more of a formula number, a washing phase of the first washing machine, an amount of linen in the first washing machine, an amount of water in the first washing machine, a temperature of the water in the first washing machine, a status of the first washing machine, and an alarm signal associated with the first washing machine; and/or
wherein the system controller is configured to select the one or more products and determine the respective amount of the one or more products to dispense to the first washing machine based on the first information.

9. A method of selectively dispensing a respective amount of one or more products to one or more washing machines of a plurality of washing machines, comprising:
receiving, at a protocol gateway, first information transmitted over a first physical layer according to a first communication protocol, wherein the first information is indicative of a state of a first washing machine of the plurality of washing machines;
adapting, by the protocol gateway, the first information from the first communication protocol to a second communication protocol;
transmitting, by the protocol gateway, the first information to a system controller according to the second communication protocol over a second physical layer; and
dispensing, by the system controller, an amount of the one or more products to the first washing machine based on the first information.

10. The method of claim 9, further comprising:
receiving, at the protocol gateway, second information transmitted over the first physical layer according to a third communication protocol, wherein the second information is indicative of a state of a second washing machine of the plurality of washing machines;
adapting, by the protocol gateway, the second information from the third communication protocol to the second communication protocol; and
transmitting, by the protocol gateway, the second information to the system controller according to the second communication protocol over the second physical layer.

11. The method of claim 9, further comprising:
receiving, by a first protocol interface module, the first information from the first washing machine, wherein the first information is transmitted from the first washing machine to the first protocol interface module over a third physical layer according to the first communication protocol;
adapting, by the first protocol interface module, the third physical layer to the first physical layer; and
transmitting, by the first protocol interface module, the first information according to the first communication protocol over the first physical layer.

12. The method of claim 11, wherein the first physical layer includes an appliance data bus having a first data rate, the third physical layer includes a first washing machine data link having a second data rate different from the first data rate, and adapting the third physical layer to the first physical layer includes transmitting the first information according to the first communication protocol at the first data rate on the appliance data bus.

13. The method of claim 11, further comprising:
receiving, by a second protocol interface module, second information from a second washing machine of the plurality of washing machines, wherein the second information is transmitted from the second washing machine to the second protocol interface module over a fourth physical layer according to a third communication protocol;
adapting, by the second protocol interface module, the fourth physical layer to the first physical layer; and
transmitting, by the second protocol interface module, the second information according to the third communication protocol over the first physical layer.

14. The method of claim 11, wherein the first protocol interface module is one of a plurality of protocol interface modules each in communication with the protocol gateway over the first physical layer, and further comprising:
receiving, by the protocol gateway, respective information transmitted according to a respective communication protocol from each protocol interface module over the first physical layer;
storing, by the protocol gateway, the respective information; and
transmitting, by the protocol gateway, the respective information to the system controller according to the second communication protocol over the second physical layer; optionally wherein
the second physical layer includes a controller data bus associated with a plurality of bus addresses, and the method further comprises:
associating, by the protocol gateway, each protocol interface module of the plurality of protocol interface modules with a respective bus address of the plurality of bus addresses,
associating, by the protocol gateway, information received from a respective protocol interface module with the respective bus address associated with the respective protocol interface module, and
in response to receiving, at the protocol gateway, a query from the system controller including the respective bus address, transmitting, by the protocol gateway, the stored information associated with the respective bus address to the system controller over the second physical layer.

15. The method of claim 9, wherein
the method further comprises:
receiving, by a signal interface module, one or more signals from a second washing machine of the plurality of washing machines,
generating, by the signal interface module, second information based on the one or more signals, and
transmitting, by the signal interface module, the second information to the system controller according to the second communication protocol over the second physical layer; and/or wherein
the first information defines one or more of a formula number, a washing phase of the first washing machine, an amount of linen in the first washing machine, an amount of water in the first washing machine, a temperature of the water in the first washing machine, a status of the first washing machine, and an alarm signal associated with the first washing machine; and/or wherein
the system controller is configured to select a product and determine the amount of the one or more products to dispense to the first washing machine based on the first information.
